# EUROPÄISCHE PATENTSCHRIFT

(11) **EP 1 712 460 B1**
(45) Veröffentlichungstag und Bekanntmachung des Hinweises auf die Patenterteilung: **04.03.2009**
(21) Anmeldenummer: 06116694.8
(22) Anmeldetag: 18.08.2004
(51) Int. Cl.: B62K 21/26

(54) **Fahrradgriff**
Bicycle handle-bar grip
Poignée de bicyclette

(30) Priorität: 25.08.2003 DE 20313217 U; 11.09.2003 DE 20314150 U; 21.05.2004 DE 202004008297 U
(43) Veröffentlichungstag der Anmeldung: 18.10.2006
(62) Teilanmeldung aus: 04764244.2
(73) Patentinhaber: RTI Sports Vertrieb von Sportartikeln GmbH, 56220 Urmitz (DE)
(72) Erfinder: Arnold, Franc RTI Sports Vertrieb von, 56068 Koblenz (DE)
(74) Vertreter: von Kirschbaum, Alexander

(56) Entgegenhaltungen:
- WO-A-99/39970
- DE-C- 688 541
- FR-A- 1 221 709
- US-A- 4 308 762

## Beschreibung

Die Erfindung betrifft einen Fahrradgriff, insbesondere für Rennräder, Mountainbikes u.dgl. Die WO 9 939 970 stellt einen solchen gattungsgemäßen Fahrradgriff dar.

Fahrradgriffe sind im Wesentlichen als zylinderförmige Greifelemente ausgestaltet, um sie auf einen Fahrradlenker aufstecken zu können. Um ein Verrutschen des Fahrradgriffs zu vermeiden, ist er derart angeordnet, dass er aus dem Greifbereich des Fahrradgriffs hinausragt. In diesen hinausragenden Klemmbereich wird der Fahrradgriff mit Hilfe einer Schraubenverbindung mit dem Fahrradlenker verklemmt.

Ferner ist es bekannt, als Fahrradgriff Haltehörner zu verwenden, die im Wesentlichen hornförmig ausgestaltet sind. Die Haltehörner werden in einem Fahrradlenker hinein gesteckt oder von außen aufgesteckt und mit diesem verklemmt.

Aus US 6,421,879 B1 ist es bekannt, das Haltehorn auf die Hülse eines Fahrradgriffs zu stecken und dadurch sowohl den Fahrradgriff als auch das Haltehorn gleichzeitig an dem Lenker zu verklemmen. Durch diese Verklemmung bilden der Fahrradgriff und das Haltehorn eine Einheit. Nachteilig bei einer derartigen Anordnung ist, dass beim Umgreifen von einem röhrenförmigen Greifelement des Fahrradgriffs zu einem hornförmigen Haltehorn und umgekehrt ein sicheres Lenken durch den Fahrradfahrer nicht gewährleistet ist.

Insbesondere bei Touringbikes, mit denen lange Strecken gefahren werden und bei denen häufig ein Umgreifen erfolgt, ist ein sicherer Halt des Fahrradfahrers besonders wichtig, um schnell plötzlich auftauchenden Gefahrenquellen im Straßenverkehr ausweichen zu können. Auch bei Mountainbikes, mit denen auch Downhill gefahren wird, ist ein sicherer Halt des Fahrradfahrers wichtig, da ansonsten unfallträchtige Stürze die Folge sein können.

Aufgabe der Erfindung ist es, einen Fahrradgriff zu schaffen, bei dem der Halt eines Fahrradfahrers verbessert ist.

Die Aufgabe wird erfindungsgemäß gelöst durch die Merkmale des Anspruchs 1.

Der erfindungsgemäße Fahrradgriff weist eine Hülse zum Aufstecken auf einen Fahrradlenker auf. Die Hülse weist einen Hülsenschlitz auf, so dass die Hülse mit dem Fahrradlenker verklemmt werden kann. Der Fahrradgriff weist ferner ein Greifelement auf, das von einer Hand eines Fahrradfahrers zumindest teilweise umgriffen werden kann. Das Greifelement ist an einer Außenseite der Hülse angeordnet und mit dieser verbunden. Das Greifelement erstreckt sich über einen Teil der Hülsenlänge, so dass an einem Rand der Hülse ein Klemmbereich frei bleibt, in dem ein Klemmmittel zum Verklemmen des Fahrradgriffs mit dem Fahrradlenker mit der Hülse verbunden ist. Erfindungsgemäß weist das Greifelement ein Abstützteil zum Abstützen eines Handtellers und ein Halteteil auf. Das Abstützteil ist beispielsweise im Wesentlichen ansatzförmig, keilförmig und/oder flügelförmig ausgestaltet, so dass sich eine Abstützfläche ausbildet, auf der der Handteller eines Fahrradfahrers aufliegt, wenn das Greifelement gegriffen wird. Das Halteteil ragt von der Hülse beabstandet in den Klemmbereich hinein und bildet insbesondere mit dem Abstützteil eine integrale Einheit. Das Abstützteil und das Halteteil sind derart ausgestaltet, dass sie zusammen mit dem Klemmmittel eine gemeinsame Greiffläche und/oder eine gemeinsame Haltefläche ausbilden. Wenn sich die Hand des Fahrradfahrers in einer Greifposition befindet, d.h. das Greifelement wird im Wesentlichen in Umfangsrichtung gegriffen, wird das Klemmmittel mitgegriffen, so dass das Abstützteil und das Halteteil mit dem Klemmmittel eine gemeinsame Greiffläche bilden. Wenn sich die Hand des Fahrradfahrers in einer Halteposition befindet, d.h. das Greifelement wird im Wesentlichen senkrecht zum Fahrradlenker an seinem äußeren Ende gehalten, wird das Klemmmittel mitgehalten, so dass das Abstützteil und das Halteteil mit dem Klemmmittel eine gemeinsame Haltefläche bilden.

Durch diese Anordnung ist das Klemmmittel nicht neben dem Greifelement, sondern in dem Greifelement angeordnet. Dadurch wird die aufgebrachte Klemmkraft des Klemmmittels von außen nach innen verschoben. Die aufgebrachte Klemmkraft befindet sich somit näher an dem Punkt, an dem von der Hand die größte Kraft auf den Fahrradgriff aufgebracht wird. Bei vergleichbarer Klemmkraft wird dadurch der Fahrradgriff besser gegen ein unbeabsichtigtes Verdrehen um den Lenker gesichert. Aufgrund der verbesserten Drehsicherung ist der Halt des Fahrradfahrers auch bei starken Belastungen, wie z.B. beim Downhill fahren, verbessert. Ferner ist es möglich, die gesamte Fahrradgriffbreite um die Breite des Klemmmittels, bei dem es sich beispielsweise um einen geschlitzten Klemmring handelt, zu verkürzen, da ein aus dem eigentlichen Greifbereich des Fahrradgriffs hinausragender Klemmbereich vermieden wird. Dies ist insbesondere bei gebogenen Lenkern vorteilhaft, da bei derartigen Lenkern der für einen Fahrradgriff zur Verfügung stehende Raum stark begrenzt. Somit verbleibt mehr Raum zum Anbringen weiterer Funktionselemente, z.B. einer Fahrradklingel oder eines Schalthebels.

Das Abstiatzteil, das Halteteil und das Klemmmittel sind in ihrer Formgebung insbesondere derart aufeinander abgestimmt, dass ihre Oberflächen zueinander fluchten, d.h. es treten keine störenden Vorsprünge, Stufen, Absätze, Gräben u.dgl. auf. Statt dessen bilden das Abstützteil und das Halteteil zusammen mit dem Klemmmittel eine gemeinsame Funktionseinheit. Vorzugsweise ist das Klemmmittel kein optisch störendes Beiwerk, sondern Bestandteil des Fahrradgriffs, so dass Optik und Funktion in einem Integraldesign zusammengefasst sind.

Vorzugsweise ist das Abstützteil sowohl beim Greifen in der Greiffläche als auch beim Halten in der Haltefläche mit dem Handteller des Fahrradfahrers in Kontakt. Das Abstützteil bildet also ggf. zusammen mit dem Halteteil eine Abstützfläche aus, auf der beim Umgreifen, d.h. vom Wechseln der Hand von einer Greifposition in eine Halteposition oder umgekehrt, sich der Fahrradfahrer abstützen kann, ohne den Kontakt mit dem Fahrradgriff zu verlieren. Hierzu weist das Abstützteil insbesondere eine Kontaktfläche auf, die vorzugsweise derart dreidimensional ausgeformt ist, dass ein im Wesentlichen hindernisfreies Umgreifen gewährleistet ist, wenn der Handteller auf der Kontaktfläche dreht.

Besonders bevorzugt ist das Klemmmittel als Haltehorn ausgebildet. Dadurch wird die Haltefläche vergrößert. Das Klemmmittel ist bei dieser Ausführungsform ein Teil des Haltehorrts. Ferner wird der Halt des Fahrradfahrers, wenn sich die Hand in der Halteposition befindet, verbessert. Da das Halteteil beim Halten mitgehalten wird, kann das Haltehorn kürzer ausgestaltet sein und weist eine Länge auf, die zusammen mit dem Halteteil im Wesentlichen einer Handbreite entspricht.

Eine weitere Ausführungsform besteht in einem Fahrradgriff, der zunächst eine Hülse zum Aufstecken auf einen Fahrradlenker aufweist. Die Hülse weist einen Hülsenschlitz auf, so dass die Hülse mit dem Fahrradlenker verklemmt werden kann. Der Fahrradgriff weist ferner ein Greifelement auf, das von einer Hand eines Fahrradfahrers zumindest teilweise umgriffen werden kann. Das Greifelement ist an einer Außenseite der Hülse angeordnet und mit dieser verbunden. Das Greifelement erstreckt sich über einen Teil der Hülsenlänge, so dass an einem Rand der Hülse ein Klemmbereich frei bleibt zur Anordnung eines Klemmmittels. Der Fahrradgriff weist ferner ein Haltehorn mit einem Klemmmittel auf, wobei das Klemmmittel zur Verbindung des Haltehorns mit dem Greifelement in dem Klemmbereich der Hülse angeordnet ist.

Erfindungsgemäß weist das Greifelement ein Abstützteil zum Abstützen eines Handtellers auf. Das Abstützteil ist beispielsweise im Wesentlichen ansatzförmig, keilförmig und/oder flügelförmig ausgestaltet, so dass sich eine Abstützfläche ausbildet, auf der der Handteller eines Fahrradfahrers aufliegt, wenn das Greifelement gegriffen wird.

Durch das Abstützteil erhält der Fahrradfahrer eine Abstützfläche, die von einer Mittelachse des Fahrradlenkers beabstandet ist. Zum Umgreifen, d.h. Wechseln des Handgriffs, vom Greifelement zum Haltehorn bzw. umgekehrt, kann sich der Fahrradfahrer auf das Abstützteil abstützen und, ohne den Kontakt mit dem Fahrradgriff zu verlieren, das Umgreifen bewerkstelligen. Das Abstützteil weist dafür insbesondere eine Kontaktfläche auf, die vorzugsweise derart dreidimensional ausgeformt ist, dass ein im Wesentlichen hindernisfreies Umgreifen gewährleistet ist, wenn der Handteller auf der Kontaktfläche dreht. Das Abstützteil nimmt also zusätzlich die Funktion einer Drehlagerschale wahr, auf der beim Umgreifen der Handteller gedreht wird. Das Abstützteil ist vorzugsweise außen, d.h. an dem Klemmbereich zugewandten Ende, dicker als innen, d.h. am dem Klemmbereich abgewandten Ende, ausgestaltet. Dadurch wird außen ein größerer Abstand zu einer Mittellinie der Hülse als innen gewährleistet. Dadurch besteht auch beim Umgreifen immer ein Kontakt zwischen der Hand des Fahrradfahrers und dem erfindungsgemäßen Fahrradgriff, so dass der Halt des Fahrradfahrers verbessert ist und Stürze vermieden sind. Ferner werden durch das Abstützteil Belastungen, die z.B. bei hohen Geschwindigkeiten bzw. beim Downhill-Fahren vom Fahrrad auf die Hand übertragen werden, auf eine größere Fläche verteilt. Durch die optimierte Druckverteilung wird verhindert, dass die Hand des Fahrradfahrers einschläft. Ferner werden Belastungen der Hand reduziert und der Griffkomfort verbessert. Zusätzlich wird automatisch der Griff der Hand beim Greifen des Greifelements in eine definierte Stellung gezwungen, wodurch die Handstellung automatisch korrigiert wird.

In bevorzugter Ausführungsform weist das Greifelement ferner ein Halteteil auf, das beim Halten des Haltehorns zumindest teilweise von der Hand des Fahrradfahrers mit gehalten wird. Das Halteteil wird dadurch als ein Teil des Haltehorns verwendet und bildet mit diesem zum Halten des Haltehorns eine funktionale Einheit. Die Funktion, ein sicheres Halten zu gewährleisten, wird also auf zwei Bauteile, nämlich das Haltehorn und das Halteteil, aufgeteilt. Im Vergleich zu herkömmlichen Haltehörnern kann das Haltehorn daher kürzer ausgestaltet sein. Insbesondere weist das Haltehorn eine Länge auf, die zusammen mit dem Halteteil im Wesentlichen einer Handbreite entspricht. Die Länge des Haltehorns entspricht also max. 14 cm, bevorzugt max. 10 cm und besonders bevorzugt max. 7 cm.

Das Halteteil geht insbesondere ansatzlos in das Abstützteil über und bildet mit diesem eine integrale Einheit. Vorzugsweise ragt das Halteteil von der Hülse beabstandet in den Klemmbereich hinein und steht insbesondere derart von dem Abstützteil ab, dass es auf Höhe des Klemmbereichs mit dem Haltehorn fluchtet. In besonders bevorzugter Ausführungsform weist das Halteteil eine dem Haltehorn zugewandte Innenkontur auf, die zumindest einem Teil einer Außenkontur des Haltehorns entspricht und vorzugsweise an dieser anliegt. Das Halteteil geht dabei insbesondere im Wesentlichen absatzlos in das Haltehorn über.

Beide erfindungsgemäßen Fahrradgriffe können wie nachfolgend beschrieben weitergebildet werden.

Die Lage des Haltehorns bzw. des Klemmmittels relativ zum Greifelement ist vorzugsweise beispielsweise durch eine Schwenkbarkeit des Haltehorns bzw. des Klemmmittels in dem Klemmbereich einstellbar. Die Greifposition und die Halteposition der Hand können dadurch individuell aufeinander abgestimmt werden. Mit Hilfe einer Feststelleinrichtung kann die Lage reibschlüssig und/oder formschlüssig fixiert werden. Die Positionierung des Haltehorns bzw. des Klemmmittels relativ zum Greifelement erfolgt vorzugsweise stufenlos und ist somit individuell einstellbar.

Das Halteteil weist insbesondere eine Kontur auf, die dem Handballen entspricht, der dem Daumen zugeordnet ist, so dass sich beim Halten des Haltehorns eine gleichmäßige Kraftverteilung für den Handballen ergibt. Entsprechend weist das Abstützteil vorzugsweise eine Kontur auf, die der Kontur des Handtellers entspricht, so dass beim Greifen des Greifelements eine gleichmäßige Kraftverteilung auf den Handteller gewährleistet ist.

In bevorzugter Ausführungsform ist sowohl das Haltehorn bzw. das Klemmmittel als auch das Greifelement zumindest teilweise von einer Ummantelung bedeckt. Die Ummantelung bedeckt insbesondere das Klemmmittel des Haltehorns, so dass das Klemmmittel vor Feuchtigkeit und Korrosion geschützt ist. Ferner werden durch die Ummantelung Unebenheiten an den Verbindungsstellen zwischen dem Haltehorn und dem Greifelement ausgeglichen und Vibrationen eliminiert.

Vorzugsweise ist die Ummantelung als Abstandsgewirk ausgestaltet, so dass eine zusätzliche Polsterung des erfindungsgemäßen Fahrradgriffs erfolgt. Geeignete Abstandsgewirke sind beispielsweise in DE 90 16 065 beschrieben. Besonders gut geeignete, Feuchtigkeit transportierende Abstandsgewirke weisen beispielsweise Fasern zwischen einer Oberseite und einer Unterseite des Abstandsgewirks auf, wobei die Fasern Feuchtigkeit transportieren, d.h. hydrophil sind. Derartige Abstandsgewirke sind beispielsweise in DE 196 35 170 und DE 199 10 785 beschrieben. Dadurch ist es möglich, insbesondere Schweiß, der an den Handinnenflächen auftritt, vom Körper weg zu transportieren, wodurch das Greifen des Greifelements und das Halten des Haltehorns sicherer erfolgt, da die Gefahr eines Abrutschens reduziert ist. Ferner wird dadurch der Komfort verbessert.

Vorzugsweise weist das Greifelement ein Kissen auf, das mit einem verformbaren, insbesondere gelartigen Material befüllt ist, z.B. Gel, Weichgummi oder Schaumstoff. Das Kissen weist dabei eine höhere Verformbarkeit auf als das Greifelement, so dass eine zusätzliche Polsterung realisiert werden kann. Das Kissen weist beispielsweise ein Abstandsgewirk auf. Insbesondere weist das Abstützteil und/oder das Halteteil das Kissen auf, so dass insbesondere die Handinnenfläche bzw. der Handballen vor Vibrationen geschützt ist.

Besonders bevorzugt weist das Greifelement einen Verbindungsansatz auf, der in den Klemmbereich der Hülse hinein ragt. Beim Verklemmen der Hülse durch das Klemmmittel des Haltehorns wird der Verbindungsansatz mit eingeklemmt, so dass eine sichere Verbindung des Greifelements mit der Hülse gewährleistet ist. Zusätzlich bzw. alternativ kann das Greifelement beispielsweise durch Kleben oder Vulkanisieren mit der Hülse verbunden werden.

Zum verbesserten Greifen weist das Greifelement insbesondere Ausnehmungen zur Fingeraufnahme auf. Dadurch liegt das Greifelement zumindest teilweise auch an den Seitenflächen der Finger des Fahrradfahrers an, so dass das sichere Greifen des Greifelements weiter verbessert ist.

Das Klemmmittel weist insbesondere eine Schraube auf, die mit einem Sacklochgewinde zusammenwirkt. Ferner weist das Klemmmittel vorzugsweise eine Öffnung auf, in der ein Hornschlitz angeordnet ist. Durch das Anziehen der Schrauben wird der Umfang der Öffnung verringert, so dass eine Klemmwirkung erzielt wird. Die Schraube ist dabei vorzugsweise derart angeordnet, dass ein Schraubenkopf der Schraube vollständig in dem Klemmmittel versenkt ist, so dass mögliche Verletzungskanten vermieden sind und der Komfort verbessert ist.

Der Hülsenschlitz und/oder der Hornschlitz kann zumindest teilweise mit einem elastomeren Material gefüllt sein. Dadurch werden Einkerbungen der Hülse bzw. des Haltehorns, die ggf. durch den Hornschlitz bzw. den Hülsenschlitz beim Klemmen verursacht werden könnten, vermieden. Ferner wird dadurch beim Klemmen die Reibung zwischen der Hülse und dem Lenker erhöht, so dass eine zusätzliche Verdrehsicherung realisiert wird. Der Halt des Fahrradfahrers ist somit verbessert, selbst wenn die Klemmwirkung nachlassen sollte. Dies erhöht die Sicherheit des Fahrradfahrers. Das elastomere Material stimmt insbesondere mit dem Material des Greifelements überein, so dass die Herstellung des erfindungsgemäßen Fahrradgriffs vereinfacht ist.

Bei der erfindungsgemäßen Ausführungsform weist die Hülse einen flügelförmigen Ansatz auf, der in das Abstützteil des Greifelements ragt. Vorzugsweise weist der flügelförmige Ansatz zusätzlich auch in den Halteteil des Greifelementes. Hierdurch können auftretende Kräfte leichter übertragen werden. Insbesondere ist der flügelförmige Ansatz von dem Greifelement umspritzt. Hierbei ist es besonders vorteilhaft, in dem flügelförmigen Ansatz Durchgangsöffnungen vorzusehen. Hierdurch werden beim Umspritzen des flügelförmigen Ansatz mit dem Greifelement Stege gebildet, die durch die Durchgangsöffnungen verlaufen und eine Verbindung zwischen den einander gegenüberliegenden Seiten des Greifelements durch den Ansatz hindurch bilden. Hierdurch ist ein Verrutschen des Greifelementes auf der Hülse vermieden.

Vorzugsweise weist die Hülse selbst ebenfalls Durchgangsöffnungen auf, in die beim Umspritzen das Material des Greifelementes eindringt. Hierdurch gelangt das Material des Greifelementes bei aufgestrecktem Fahrradgriff mit dem Lenkerrohr in Berührung und erhöht somit die Reibung zwischen dem Griff und dem Lenkerrohr. Dies hat den Vorteil, dass sich der Fahrradgriff nicht so leicht löst, wenn beispielsweise die Klemmwirkung des Klemmelementes nachlässt, da sich diese beispielsweise gelockert haben.

Bei einer weiteren bevorzugten Ausführungsform weist die Oberfläche des Greifelementes mindestens eine, vorzugsweise mehrere Reibzonen auf. Vorzugsweise sind mehrere Reibzonen mit unterschiedlicher Reibung ausgebildet. Eine Reibzone kann an der Ballenanlage vorgesehen sein, wobei in diesem Bereich eine mittlere Reibung gegeben ist, um einen besseren Griff und ein Verrutschen des Handballens zu vermeiden. Im Bereich des Daumens und des Zeigefingers ist ein Bereich mit geringer Reibung vorgesehen. Dies ist für das Schalten und Bremsen vorteilhaft. Ferner kann im Bereich der Fingerspitzen ein Bereich mit hoher Reibung vorgesehen sein. Hierdurch ist die Sicherheit insbesondere beim Downhill fahren verbessert. Vorzugsweise weist der erfindungsgemäße Fahrradgriff alle drei vorstehend beschriebenen Reibungsbereiche auf. Je nach Einsatzgebiet des Fahrradgriffes kann dieser jedoch nur einen oder zwei der vorstehend beschriebenen Reibungsbereiche aufweisen.

Bei einer weiteren bevorzugten Ausführungsform weist der Fahrradgriff gegenüber einer Lenkerstanger ein Offset auf. Hierbei wird unter Offset beispielsweise verstanden, dass die Mittelachse des Fahrradgriffs gegenüber der Mittelachse des Lenkers geneigt ist. Ein Offset, durch den eine verbesserte Stellung des Handgelenkes erzielt werden soll, kann jedoch erfindungsgemäß insbesondere dadurch erzielt werden, dass das Greifelement des Fahrradgriffs im Wesentlichen in der Mitte eine Verdickung aufweist. Die Verdickung ist vorzugsweise auf der Vorderseite bzw. der Fingerseite des Greifelementes vorgesehen. Die Verdickung ist daher vorzugsweise auf der vom Körper abgewandten Seite des Greifelementes vorgesehen. Die Lage der Verdickung ist vorzugsweise im Bereich des Mittelfingers. Bereits bei einer Verdickung von 1 - 2 mm kann ggf. ein gewünschter Offset erzielt werden. Durch den Offset wird die Stellung des Handgelenkes derart optimiert, dass gegenüber herkömmlichen Stelltangen des Handgelenkes beim Fahrradfahren keine Nerven eingeklemmt werden. Dies hat den Vorteil, dass die Handgelenke auch bei längeren Fahrten nicht schmerzen. Auf Grund des erfindungsgemäßen Offsets verbleibt das Handgelenk im Wesentlichen gerade. Dies kann auf Grund der erfindungsgemäßen Ausgestaltung des Fahrradgriffs auch in unterschiedlichen Griffstellungen gewährleistet werden.

Nachfolgend wird die Erfindung anhand bevorzugter Ausführungsformen unter Bezugnahme auf die anliegenden Zeichnungen näher erläutert.

Es zeigen:
- Fig. 1: eine schematische Schnittansicht des erfindungsgemäßen Fahrradgriffs in demontiertem Zustand,
- Fig. 2: eine schematische, teilweise geschnittene Seitenansicht des Fahrradgriffs in montiertem Zustand,
- Fig. 3: eine schematische Draufsicht des Fahrradgriffs ohne Klemmmittel,
- Fig. 4: eine schematische Draufsicht des Fahrradgriffs mit Klemmmittel,
- Fig. 5: eine schematische Schnittansicht entlang der Linie V-V aus Fig. 3,
- Fig. 6: eine schematische Schnittansicht entlang der Linie VI-VI aus Fig. 3 und
- Fig. 7: eine schematische Draufsicht einer weiteren Ausführungsform der Hülse.

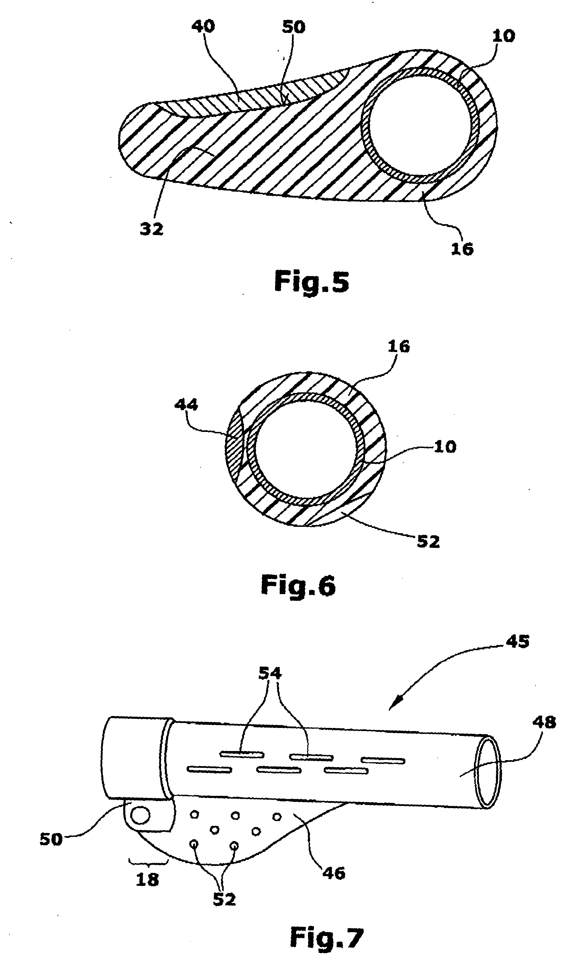

Eine erfindungsgemäße Ausführungsform einer Hülse 45 (Fig. 7) weist einen flügelförmigen Ansatz 46 auf. Der flügelförmige Ansatz 46 weist vorzugsweise eine gleichmäßige Dicke auf, die beispielsweise 2 mm bis 3 mm betragen kann. Ggf. wird der flügelförmige Ansatz 46 im Bereich der Verbindung zu dem zylindrischen Hülsenbereich 48 hin dicker, um eine bessere Verbindung zu erzielen. Vorzugsweise ist die gesamte Hülse 45 aus einem einzigen Kunststoff hergestellt und einstückig ausgebildet. Ferner weist der flügelförmige Ansatz 46 vorzugsweise in den Klemmbereich 18 hinein. In dem Klemmbereich 18 weist die Hülse 45 ferner eine Öse 50 auf, durch die eine Schraube 28 gesteckt wird. Durch die Öse 50 ist die Lage des Klemmmittels 20 gegenüber der Hülse 45 definiert.

Vorzugsweise wird die Hülse 45 zur Herstellung des Greifelements 16 umspritzt. Dies erfolgt vorzugsweise in einer Form, wobei in einem ersten Arbeitsschritt die Hülse 45 durch Spritzgießen hergestellt wird und sodann durch ein Elastomer oder einen anderen Stoff umspritzt wird. Um ein sicheres Verbinden zwischen dem Greifelement 16 und der Hülse 45 zu gewährleisten, weist der flügelförmige Ansatz vorzugsweise Durchgangsöffnungen 52 auf.

Ebenso können in den zylindrischen Teil 48 der Hülse 45 Durchgangsöffnungen 54 vorgesehen sein, durch die das Elastomer eindringt und bei aufgestecktem Fahrradgriff die Reibung zur Lenkerstange 12 erhöht.

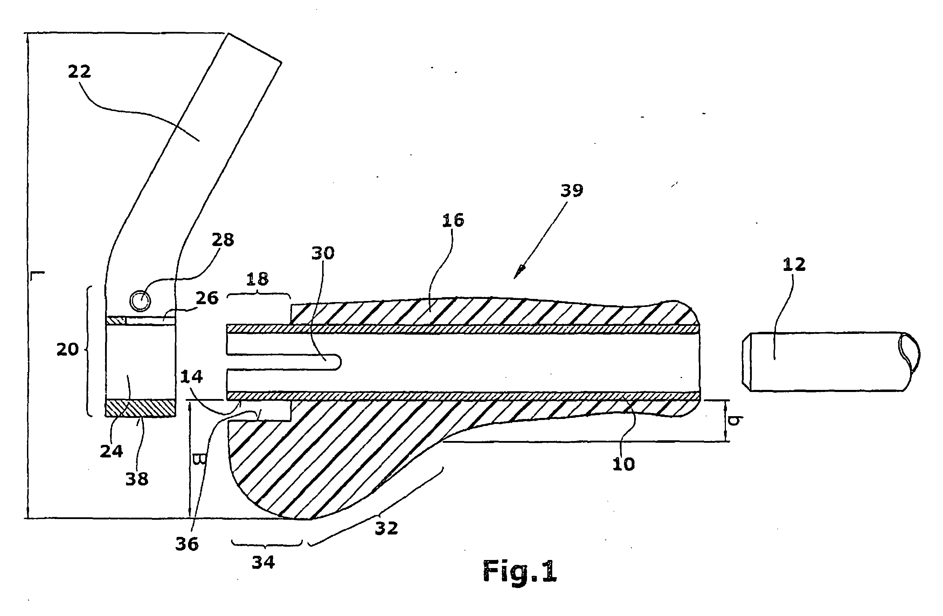

Eine Ausführungsform des Fahrradgriffs (Fig. 1) weist eine Hülse 10 zum Aufstecken auf einen Fahrradlenker 12 auf. Auf einer Außenseite 14 der Hülse 10 ist über einen Teil der Länge der Hülse 10 ein Greifelement 16 angeordnet. Ein Klemmbereich 18 ist von dem Greifelement 16 nicht bedeckt, so dass in ihm ein Klemmmittel 20, das Teil eines Haltehorns 22 ist, angeordnet werden kann.

Das Klemmmittel 20 weist eine Öffnung 24 auf, in dem ein Hornschlitz 26 angeordnet ist. Mit Hilfe einer Schraube 28, die in ein Sacklockgewinde eingreift, kann der Umfang der Öffnung 24 verringert werden, so dass ein Klemmen erfolgt. Da die Hülse 10 einen Hülsenschlitz 30 aufweist, wird die Hülse 10 durch das Klemmmittel 20 zumindest im Klemmbereich 18 mit dem Fahrradlenker 12 verklemmt. Da die Hülse 10 vor dem Verklemmen auf dem Fahrradlenker 12 drehbar ist, kann besonders einfach die Ausrichtung und Lage des Greifelements 16 individuell an die Bedürfnisse eines Fahrradfahrers angepasst werden.

Das Greifelement 1.6 weist ein Abstützteil 32 zum insbesondere flächigen Abstützen eines Handtellers auf. Das Abstützteil 32 geht übergangslos in ein Halteteil 34 über, das von der Hülse 10 beabstandet in den Klemmbereich 18 hinein ragt. Das Halteteil 34 weise eine Innenkontur 36 auf, die entsprechend einer Außenkontur 38 des Haltehorns 22 ausgestaltet ist. Dadurch kann eine formschlüssige Verbindung zwischen dem Greifelement 16 und dem Haltehorn 22 erreicht werden, so dass das Haltehorn 22 relativ zum Greifelement 16 lagefixiert ist.

An der vom Körper abgewandten Seite des Greifelementes 16 ist eine Verdickung 39 vorgesehen, die im Wesentlichen in der Mitte des Greifelementes 16 angeordnet ist. Durch die Verdickung 39 kann ein Offset des Handgelenks erzielt werden, so dass das Handgelenk beim Greifen des erfindungsgemäßen Fahrradgriffs im Wesentlichen gerade ausgerichtet bleibt. Hierdurch ist die Gefahr von Ermüdungen sowie das Einklemmen von Nerven verringert.

Eine Länge I des Haltehorns 22 zusammen mit dem Halteteil 34 entspricht im Wesentlichen einer Handbreite. Die Länge I beträgt insbesondere 8 - 15 cm und bevorzugt 8 - 12 cm. Das Abstützteil 32 weist außen eine Breite B auf, die insbesondere 2 - 7 cm und bevorzugt 3-4 cm beträgt. Innen weist das Abstützteil 32 eine Breite b auf, die insbesondere 1 - 10 mm und bevorzugt 1,5-5 mm beträgt.

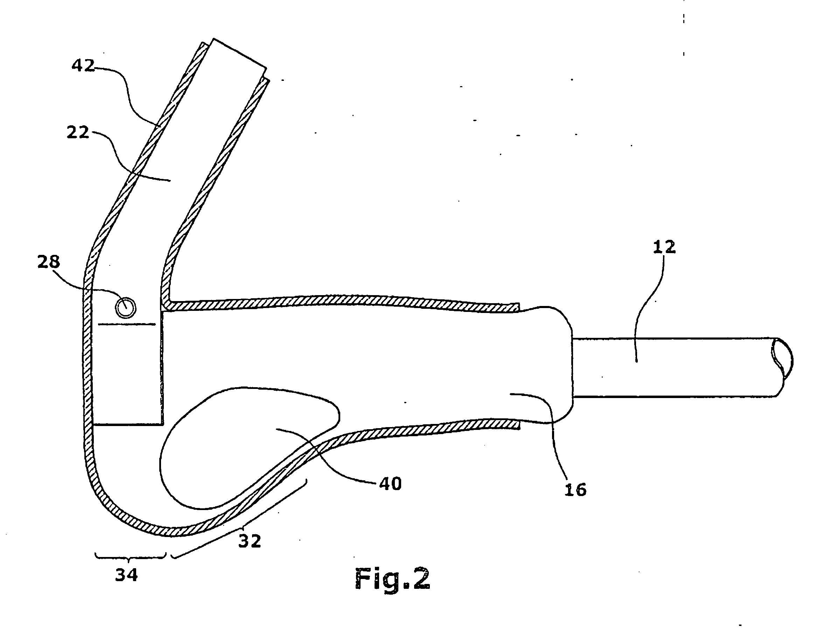

Das Abstützteil 32 weist ferner ein Kissen 40 auf (Fig. 2), das mit einem Gel gefüllt ist. Das Kissen 40 ist insbesondere in dem Bereich einer Kontaktfläche angeordnet, auf der beim Umgreifen des Fahrradfahrers zwischen dem Greifelement 16 und dem Haltehorn 22 bzw. umgekehrt ein Drehen des Handtellers erfolgt.

Das Haltehorn 22 und das Greifelement 16 sind von einem Abstandsgewirk 42 ummantelt. Da die Schraube 28 vollständig in dem Haltehorn 22 versenkt ist, wird eine im Wesentlichen gleichmäßige ebene Fläche gewährleistet. Das Abstandsgewirk 42 ist beispielsweise mehrstückig ausgestaltet und durch Molden zu einer Einheit verbunden. Ferner kann das Abstandsgewirk 42 durch Molden, Vulkanisieren oder Kleben mit dem Greifelement 16 verbunden sein.

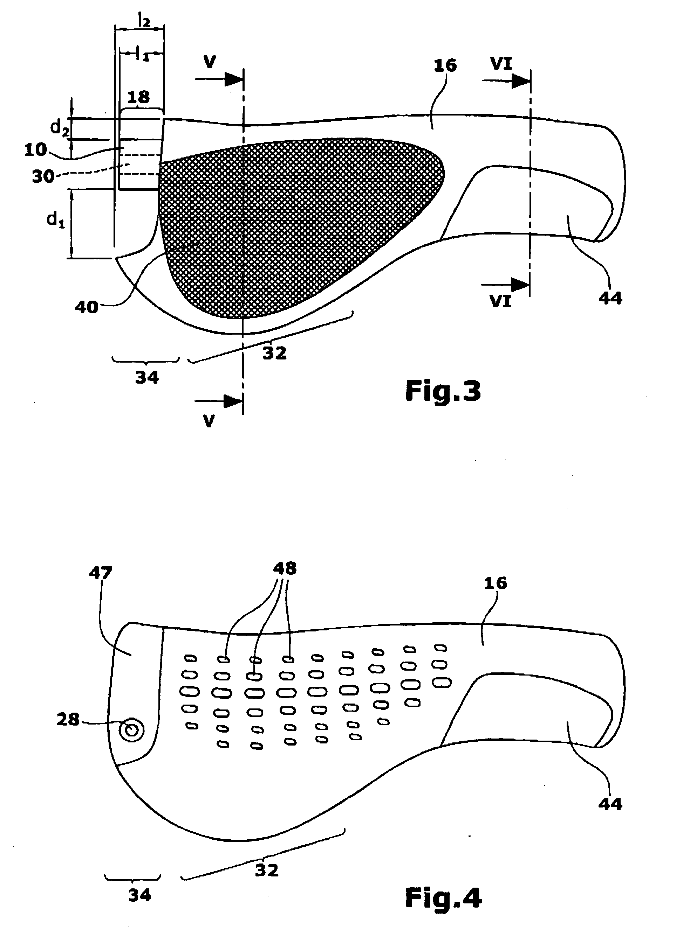

Das Halteteil 34 kann auch über den Klemmbereich 18 hinaus ragen (Fig. 3), d.h. die Länge I₂ von Beginn des Klemmbereichs 18 bis zum Ende des Halteteils 34 ist länger als die Länge I₁ des Klemmbereichs 18. Dadurch ist es möglich, den Raumbedarf des Fahrradgriffs für den Fahrradlenker 12 um die Strecke I₂ - I₁ zu reduzieren. Das Klemmmittel 20 bzw. das Haltehorn 22 ist vorzugsweise derart ausgestaltet, dass ihre Breite die Länge I₂ aufweist, die Klemmwirkung aber insbesondere in dem Klemmbereich 18 aufgebracht wird. Dies lässt sich besonders einfach erreichen, indem der Hornschlitz 26 des Klemmmittels 20 in etwa die Länge I₁ aufweist.

Der Abstand d₁ des Halteteils 34 zur Hülse 10 stimmt, beispielsweise wenn das Haltehorn 22 verwendet wird, mit dem Abstand d₂ zwischen der Hülse 10 und dem Ende des Greifelements 16 überein. Die Abstände d₁ und d₂ können voneinander abweichen, wenn ein als Klemmring ausgestaltetes Klemmmittel 20 verwendet wird. Je nachdem, ob die Schraube 28 in der Fig. 3 oben oder unten angeordnet ist, ist der Abstand d₁ oder d₂ größer als der andere ausgeführt.

Das Greifelement 16 kann ein Greifteil 44 aufweisen, das beim Greifen mit dem Daumen des Fahrradfahrers in Kontakt steht. Das Greifteil 44 weist insbesondere einen niedrigen Reibungskoeffizienten auf, so dass insbesondere beim Umgreifen der Daumen besonders schnell bewegt werden kann. Dadurch werden ferner wundgescheuerte Hautflächen, Blasen u.dgl. im Bereich zwischen Daumen und Zeigefinger vermieden. Damit insbesondere bei feuchten Händen keine Adhäsionskräfte auftreten, weist das Greifteil 44 insbesondere eine hydrophobe Oberfläche auf.

Das Greifelement 16 kann auch mehrere Vertiefungen 48 aufweisen (Fig. 4). Mit Hilfe der Vertiefungen 48 kann eine besonders hohe Reibung erzeugt werden, so dass der Halt des Fahrradfahrers weiter verbessert ist. Ein derartiger Bereich mit einer besonders hohen Reibung kann insbesondere an der Unterseite des Abstützteils 32 vorgesehen werden, so dass die Gefahr, dass die Hand von dem Greifelement 16 abrutscht, weiter reduziert ist. Das Klemmmittel 20 ist im dargestellten Ausführungsbeispiel als Klemmring 46 ausgestaltet. Der Klemmring 46 korrespondiert mit dem Design des Greifelements 16, d.h. die Form des Greifelements 16 wird durch den Klemmring 46 nicht unterbrochen, sondern fortgeführt. Die Schraube 28 ist im dargestellten Ausführungsbeispiel im unteren Bereich des Klemmrings 46 angeordnet, so dass der Abstand d₁ größer als der Abstand d₂ ausgeführt ist. Ferner ist die Schraube 28 in den Klemmring 46 vollständig versenkt, so dass störende Kanten vermieden sind.

Das Abstützteil 32 ist im Querschnitt im Wesentlichen keilförmig ausgestaltet (Fig. 5), so dass es im Wesentlichen radial von der Hülse 10 weg gerichtet ist. Zur Aufnahme des Kissens 40 weist das Greifelement 16 bzw. das Abstützteil 32 eine Vertiefung 50 auf, in der das Kissen 40 beispielsweise durch Molden, Vulkanisieren oder Kleben fest verbunden ist.

Das Greifelement 16 kann ferner Ausnehmungen 52 (Fig. 6) aufweisen zur Aufnahme von Fingern. Dadurch wird der Halt des Fahrradfahrers weiter verbessert. Das Greifteil 44 kann ähnlich wie das Kissen 40 durch Molden, Vulkanisieren oder Kleben mit dem Greifelement 16 verbunden sein.

In einer weiteren bevorzugten Ausführungsform ist anstatt der Hülse 10 eine Hülse 45 vorgesehen. Die Hülse 45 weist vorzugsweise einen flügelförmigen Ansatz 46 auf. Dieser kann sodann von dem Greifelement 16 umspritzt werden. Hierdurch ist die Stabilität des Abstützteils 32 erhöht. In dem flügelförmigen Ansatzteil 46 sind vorzugsweise Durchgangsöffnungen 52 vorgesehen.

Ebenso weist in einer bevorzugten Ausführungsform die Hülse 45 selbst im zylindrischen Bereich Durchgangsöffnungen 54 auf. Die Durchgangsöffnungen 54 tragen nach dem Umspritzen mit dem Greifelement 16 Ansätze aus Kunststoff.

Des weiteren weist die in Figur 7 dargestellte Hülse 45 eine Öse 50 auf, die in den Klemmbereich 18 ragt und zur Fixierung des Klemmmittels 20 dient.

Im Bereich der Öse 50, die vorzugsweise Teil des Ansatzteils 46 ist, stützt sich das Ansatzteil 46 an der Hülse 45 ab. Hierdurch ist die Steifigkeit des flügelförmigen Ansatzteils 46 erhöht. Um die Steifigkeit des Flügelförmigen Ansatzes 46 weiter zu erhöhen, weist das Ansatzteil 46 ausgehend von der Hülse 45 eine vorzugsweise stetig abnehmende Dicke auf. Hierbei weist das Ansatzteil 46 an der Hülse 45 vorzugsweise eine Dicke von 3 - 4 mm auf. Am gegenüberliegenden freien Ende weist das Ansatzteil 46 vorzugsweise eine Dicke von 1 - 2 mm auf. Ferner ist es besonders bevorzugt, dass der Übergang zwischen dem Ansatzteil 46 und der Hülse 45 rund erfolgt. Hierbei ist vorzugsweise auf beiden Seiten ein Radius von 1,5 - 2 mm vorgesehen.

## Patentansprüche

1. Fahrradgriff, insbesondere für Touringbikes und Mountainbikes, mit
einer Hülse (45) zum Aufstecken auf einen Fahrradlenker (12), wobei die Hülse (45) vorzugsweise einen an einem Rand der Hülse (45) angeordneten Klemmbereich (18) aufweist,
einem mit der Hülse (10, 45) verbundenen Greifelement (16), wobei das Greifelement (16) ein Abstützteil (32) zum Abstützen eines Handtellers und ein Halteteil (34) aufweist, wobei das Halteteil (34) von der Hülse (45) radial beabstandet Ist, und wobei das Abstützteil (32) übergangslos in das Halteteil (34) übergeht,
**gekennzeichnet dadurch, daß**
ein mit der Hülse (45) verbundener flügelförmiger Ansatz (46), in das Abstützteil (32) ragt.

2. Fahrradgriff nach Anspruch 1, **dadurch gekennzeichnet, dass** der flügelförmige Ansatz (46) In das Halteteil (34) ragt.

3. Fahrradgriff nach Anspruch 1 oder 2, **dadurch gekennzeichnet, dass** der flügelförmige Ansatz (46) Durchgangsöffnungen (52) zur Verbesserung der Verbindung mit dem Greifelement (16) aufweist.

4. Fahrradgriff nach einem der Ansprüche 1 - 3, **dadurch gekennzeichnet, dass** die Hülse (45) Durchgangsöffnungen aufweist, in die Ansätze des Greifelements (16) ragen.

5. Fahrradgriff nach einem der Ansprüche 1 - 4, **gekennzeichnet durch** ein im Klemmbereich (18) mit der Hülse (45) verbundenes Klemmmittel (20).

6. Fahrradgriff nach einem der Ansprüche 1 - 5, **dadurch gekennzeichnet, dass** das Abstützteil (32) sowohl beim Greifen in der Greiffläche als auch beim Halten in der Haltefläche mit dem Handteller In Kontakt ist.

7. Fahrradgriff nach Anspruch 5 oder 6, **dadurch gekennzeichnet, dass** das Klemmmittel (20) als Haltehorn (22) ausgebildet ist.

8. Fahrradgriff nach einem der Ansprüche 1 - 7, **dadurch gekennzeichnet, dass** das Abstützteil (32) im Querschnitt keilförmig ausgestaltet ist und im Längsschnitt außen, insbesondere beim Übergang zum Halteteil (34), eine größere Dicke als innen aufweist.

9. Fahrradgriff nach einem der Ansprüche 5 - 8, **dadurch gekennzeichnet, dass** das Halteteil (34) eine Innenkontur (36) aufweist, die zumindest teilweise einer Außenkontur (38) des Haltehorns (22) bzw. des Klemmmittels (20) entspricht und insbesondere eine formschlüssige Verbindung zwischen dem Haltehorn (22) bzw. dem Klemmmittel (20) und dem Greifelement (16) bewirkt.

10. Fahrradgriff nach einem der Ansprüche 1 - 9, **dadurch gekennzeichnet, dass** das Greifelement (16), insbesondere das Abstützteil (32), ein Kissen (40) aufweist, das ein verformbares, insbesondere gelartiges Material aufweist, wobei das Kissen (40) eine höhere Verformbarkeit aufweist als das Greifelement (16).

11. Fahrradgriff nach einem der Ansprüche 1 - 10, **dadurch gekennzeichnet, dass** das Greifelement (16) einen in den Klemmbereich (18) hinein ragenden Verbindungsansatz aufweist.

12. Fahrradgriff nach einem der Ansprüche 1 - 11, **dadurch gekennzeichnet, dass** die Hülse (45) eine in den Klemmbereich (18) ragende Öse (50) zur Lagefixierung des Klemmmittels (20) aufweist.

13. Fahrradgriff nach einem der Ansprüche 1 - 12, **dadurch gekennzeichnet, dass** der Fahrradgriff gegenüber einer Lenkerstange (12) einen Offset aufweist, der durch eine Verdickung (39), die im wesentlichen in der Mitte des Greifelementes (16) vorgesehen ist, hervorgerufen ist.

## Claims

1. A bicycle bar grip, particularly for touring bikes and mountain bikes, comprising
a sleeve (45) for being slipped onto a bike handlebar (12), the sleeve (45) preferably comprising a clamping area (18) arranged at an edge of the sleeve (45),
a grip element (16) connected with the sleeve (10, 45), the grip element (16) comprising a supporting portion (32) for supporting a palm and a holding portion (34), the holding portion (34) being spaced radially from the sleeve (45), and wherein the supporting portion (32) passes smoothly into the holding portion (34),
**characterized in that** a wing-shaped projection (46) connected with the sleeve (45) projects into the supporting portion (32).

2. The bicycle bar grip of claim 1, **characterized in that** the wing-shaped projection (46) projects into the holding portion (34).

3. The bicycle bar grip of claim 1 or 2, **characterized in that** the wing-shaped projection (46) comprises through holes (52) for improving the connection with the grip element (16).

4. The bicycle bar grip of one of claims 1-3, **characterized in that** the sleeve (45) comprises through holes into which projections of the grip element (16) project.

5. The bicycle bar grip of one of claims 1-4, **characterized by** a clamping means (20) connected with the sleeve (45) in the clamping area (18).

6. The bicycle bar grip of one of claims 1-5, **characterized in that** the supporting portion (32) is in contact with the palm upon gripping in the grip surface as well as upon holding in the holding surface.

7. The bicycle bar grip of claim 5 or 6, **characterized in that** the clamping means (20) is configured as a holding bar end extension (22).

8. The bicycle bar grip of one of claims 1-7, **characterized in that** the supporting portion (32) is wedge-shaped in cross section and, in longitudinal section, has a greater thickness outside than inside, particularly at the transition to the holding portion (34).

9. The bicycle bar grip of one of claims 5-8, **characterized in that** the holding portion (34) has an inner contour (36) corresponding at least partially to an outer contour (38) of the holding bar end extension (22) or the clamping means (20) and particularly effecting a positive connection between the holding bar end extension (22) or the clamping means (20) and the grip element (16).

10. The bicycle bar grip of one of claims 1-9, **characterized in that** the grip element (16), particularly the supporting portion (32), comprises a pad (40) including a deformable, particularly gel-like material, the pad (40) having a higher deformability than the grip element (16).

11. The bicycle bar grip of one of claims 1-10, **characterized in that** the grip element (16) comprises a connection projection projecting into the clamping area (18).

12. The bicycle bar grip of one of claims 1-11, **characterized in that** the sleeve (45) comprises an eyelet (50) projecting into the clamping area (18) for fixing the position of the clamping means (20).

13. The bicycle bar grip of one of claims 1-12, **characterized in that** the bicycle bar grip has an offset relative to a handlebar (12), the offset being caused by a thickening (39) provided substantially in the middle of the grip element (16).

## Revendications

1. Poignée de bicyclette, en particulier pour vélos de tourisme et vélos tout terrain, comportant
un manchon (45) destiné à être emboîté sur un guidon (12) de vélo, le manchon (45) présentant, de préférence, une zone de serrage (18) disposée sur un bord du manchon (45),
un élément de préhension (16) assemblé avec le manchon (10,45), l'élément de préhension (16) présentant un élément d'appui (32) prévu pour l'appui de la paume de la main, et un élément de maintien (34), l'élément de maintien (34) radialement écarté du manchon (45), et l'élément d'appui (32) passant dans l'élément de maintien (34) sans transition,
**caractérisée en ce que**
un prolongement (46) en forme d'aile est connecté avec le manchon (45), le prolongement dépassant dans l'élément d'appui (32).

2. Poignée de bicyclette selon la revendication 1, **caractérisée en ce que** le prolongement (46) en forme d'aile dépasse dans l'élément de maintien (34).

3. Poignée de bicyclette selon la revendication 1 ou 2, **caractérisée en ce que** le prolongement (46) en forme d'aile présente des trous de passage (52) pour l'amélioration de l'assemblage avec l'élément de préhension (16).

4. Poignée de bicyclette selon l'une des revendications 1 - 3, **caractérisée en ce que** le manchon (45) présente des trous de passage dans lesquels dé passent les pattes d'attache de l'élément de préhension (16).

5. Poignée de bicyclette selon l'une des revendications 1 - 4, **caractérisée par** un moyen de serrage (20) assemblé avec le manchon (45) dans la zone de serrage (18).

6. Poignée de bicyclette selon l'une des revendications 1-5, **caractérisée en ce que** l'élément d'appui (32) est en contact avec la paume de la main aussi bien lors de la préhension sur la surface de préhension que lors du maintien sur la surface de maintien.

7. Poignée de bicyclette selon la revendication 5 ou 6, **caractérisée en ce que** le moyen de serrage (20) est réalisé en tant que corne de maintien (22).

8. Poignée de bicyclette selon l'une des revendications 1 - 7, **caractérisée en ce que** l'élément d'appui (32) est en forme de coin dans sa section transversale et, dans sa section longitudinale à l'extérieur, présente une plus grande épaisseur qu'à l'intérieur, en particulier au niveau de la transition avec l'élément de maintien (34).

9. Poignée de bicyclette selon l'une des revendications 5 - 8, **caractérisée en ce que** l'élément de maintien (34) présente un contour intérieur (36) qui correspond, au moins en partie, à un contour extérieur (38) de la corne de maintien (22) ou du moyen de serrage (20) et opère en particulier un assemblage à conjugaison de forme entre la corne de maintien (22) ou l'élément de serrage (20) et l'élément de préhension (16).

10. Poignée de bicyclette selon l'une des revendications 1 - 9, **caractérisée en ce que** l'élément de préhension (16), en particulier l'élément d'appui (32) présente un coussin (40) réalisé dans un matériau déformable, en particulier similaire à du gel, le coussin (40) présentant une déformabilité plus élevée que l'élément de préhension (16).

11. Poignée de bicyclette selon l'une des revendications 1 - 10, **caractérisée en ce que** l'élément de préhension (16) présente une patte de liaison dépassant dans la zone de serrage (18).

12. Poignée de bicyclette selon l'une des revendications 1 - 11, **caractérisée en ce que** le manchon (45) présente un oeillet (50) dépassant dans la zone de serrage (18) pour la fixation de la position de l'élément de serrage (20).

13. Poignée de bicyclette selon l'une des revendications 1 - 12, **caractérisée en ce que** la poignée de bicyclette est décalée par rapport au tube (12) de guidon, le décalage étant réalisé par un épaississement (39) prévu sensiblement au milieu de l'élément de préhension (16).
